# EUROPÄISCHE PATENTSCHRIFT

(11) **EP 1 203 529 B1**
(45) Veröffentlichungstag und Bekanntmachung des Hinweises auf die Patenterteilung: **31.05.2006**
(21) Anmeldenummer: 01890301.3
(22) Anmeldetag: 31.10.2001
(51) Int. Cl.: A01K 5/02

(54) **Verfahren zum Aufbereiten und dosierten Zuführen von Flüssigfutter**
Method for the preparation and the dosed delivery of liquid feed
Procédé pour la préparation, le dosage et la distribution des aliments liquides

(30) Priorität: 03.11.2000 AT 18672000
(43) Veröffentlichungstag der Anmeldung: 08.05.2002
(73) Patentinhaber: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Helmut

(56) Entgegenhaltungen:
- EP-A- 0 544 640
- EP-A- 0 696 420
- DE-A- 2 249 456
- DE-C- 4 236 375

## Beschreibung

Die Erfindung bezieht sich auf ein Verfahren nach dem Oberbegriff des Patentanspruches 1.

Verfahren dieser Art sollen jeweils eine restlose Aufteilung der entsprechend den Erfordernissen angemischten Futtermenge in genau vorherbestimmten Portionen ermöglichen. Eine vielfach angewendete Ausführungsform ist Gegenstand der DE 34 19 842 A und der EP 0 126 240 A. Die Abgabemenge an den einzelnen Abgabestellen wird durch zeitabhängig gesteuerte Dosierventile oder auch durch Wiegeeinrichtungen am Mischbehälter bestimmt, welche ihrerseits die Betätigung der Abgabeventile über eine zentrale Steuereinheit steuern. Als Förderleitung wird eine in den Bereich des Mischbehälters zurückführende Ringleitung verwendet, die bei der Ausführungsform nach der erwähnten DE 34 19 842 A einen in einen Zwischenbehälter sowie einen zu einem Ablauf führenden Auslaß aufweist, wobei ein Teil des verdrängten Wassers für die Aufbereitung der nächsten Futtermischung Verwendung finden kann und die Möglichkeit besteht, gezielt einzelne, im Zuge der Ringleitung liegende Leitungsabschnitte mit verschiedenen Futtermischungen, die nacheinander zubereitet werden, zu beschicken. Man kann auch einen Teil des im Zwischenbehälter gelagerten Wassers für das Nachdrücken des Restfutters in der Rohrleitung verwenden. Nachteilig ist, daß das im Zwischenbehälter enthaltene Wasser durch Futterreste kontaminiert ist, wobei in der Praxis sich in diesem Zwischenbehälter auch Futterreste von verschiedenen Fütterungsperioden ansammeln können, die zur Fäulnisbildung Anlaß geben und auf jeden Fall die Qualität des Futters beeinträchtigen. Eine vollständige und ordnungsgemäße Reinigung des gesamten Leitungssystems ist bei dieser Ausführung im Zuge des normalen Fütterungsablaufes nicht möglich. Wegen der Kontaminierung wird vorgeschrieben, den Zwischenbehälter periodisch vollständig in einen Ablauf zu entleeren und von allen vorhandenen Rückständen zu befreien. Man kann auch auf den Zwischenbehälter verzichten und das kontaminierte Wasser unmittelbar in einen Kanal oder in eine Güllegrube ableiten. Das abgeführte Wasser ist verunreinigt und führt zu einer Umweltverschmutzung bzw. zu einer unerwünschten Verdünnung der Jauche, wenn es in die Jauchegrube geleitet wird. Die gleichen Nachteile treten auch bei der Fütterungsanlage gemäß der erwähnten EP 0 126 240 A und auch nach der EP 0 296 260 auf. Dort ist zusätzlich die Möglichkeit vorhanden, verschiedene Futtermischungen vorzubereiten und nacheinander unter Zwischenschaltung von Wassersäulen in die Förderleitung einzupumpen, wobei jeweils die Ventile an den Abgabestellen geöffnet werden, die für den Empfang der momentan in ihrem Bereich befindlichen Futtersäule bestimmt sind. Auch hier muß das nachdrückende Wasser zwischengelagert oder entsorgt werden, wobei die jeweils zu entsorgende Wassermenge dem gesamten Füllvolumen des Leitungssystems entspricht. Dabei werden nach der EP 0 296 260 A zwei Trennkörper vorgesehen, die die Futterportionen vom Wasser abtrennen. Die Rohrleitung kann von der Rückseite ebenfalls mit Wasser beaufschlagt werden, um die Trennkörper in die Ausgangslage zur Aufnahme und Abgrenzung der nächsten Futterportion zurückzustellen. Nach der AT 400 995 A wird vorgesehen, das zunächst ebenfalls für die Förderung eines kleinen Restfutterstranges verwendete Wasser durch Drucklufteinsatz in den Mischbehälter zurückzublasen und dort für die Zubereitung der nächsten Futtermischung zu verwenden, wobei die Leitungen bis zur nächsten Futterausgabe trocken bleiben, beim Einblasen der Luft aber die Möglichkeit besteht, durch Erzeugung eines Wassernebels mittels der Druckluft eine sehr genaue Reinigung der Leitungen zu erzielen. Nachteilig bei diesem Verfahren ist an sich nur der hohe technische Einsatz mit einem zusätzlichen Drucklufterzeuger und aufwendigeren Steuereinrichtungen.

Die oben im Zusammenhang mit den erwähnten EP aufgezeichneten Nachteile ergeben sich auch bei allen anderen einschlägigen Konstruktionen nach dem Stand der Technik. Beispielsweise verwendet eine Fütterungsanlage nach der DE 298 23 032 U1 zusätzlich zu einem Brauchwassertank und einem Frischwassertank noch einen eigenen Altwassertank zur Aufnahme des kontaminierten Wassers. Futterförderung und Wassereinleitung erfolgt ausschließlich in einer Pumprichtung. Nach der DE 42 06 728 A wird ebenfalls ein Brauchwassertank und ein Frischwassertank vorgesehen. Zusätzlich wird ein Ringverteiler eingesetzt, der eine Beaufschlagung der Leitung von zwei Seiten her ermöglicht. Die Ausführungen nach der DE 40 40 450 C und der entsprechenden EP 0 491 312 A sieht zwei Mischtanks, zwei Brauchwassertanks und zwei Mischwassertanks vor, wobei an der Abgabestelle ein Trennkörper vorgesehen ist, um eine Trennung der beiden verschiedenen, in den Mischtanks vorbereiteten Futtersorten Verwendung findet.

Bei einer Konstruktion nach der FR 2 156 212 A ist keine exakt dosierte Restverteilung des zugeförderten Futters möglich. Bei diesem Verfahren wird das Futter über eine in beiden Förderrichtungen wirksame Pumpe aus dem Mischbehälter in eine am Ende verschließbare Leitung, von der wieder die Abgabeeinrichtungen abzweigen, gepumpt. Die Leitung ist über ein Absperrorgan mit einem nachfüllbaren Wasservorratsbehälter verbunden, aus dem durch Umschaltung der Pumpe auf Saugbetrieb Wasser mit in der Leitung verbliebenen Futterresten angesaugt und in den Mischbehälter gefördert werden kann, wo es für die Zubereitung der nächsten Futtercharge Verwendung findet. Es ist keine exakt dosierte Restlosfütterung möglich, wobei von Haus aus nur handbetätigte Futterabgabeventile zum Einsatz gelangen, also keine Automatisierung des Fütterungsbetriebes möglich ist.

Wesentliche Probleme bei der dosierten Futterabgabe ergeben sich insbesondere bei der Fütterung von Mastschweinen, wenn eine sogenannte "ad libitum"-Fütterung eingesetzt wird, bei der in bestimmten Zeitabständen, aber häufig am Tag, gefüttert wird, wenn ein Trog an der jeweiligen Futterabgabestelle leergefressen ist, was sich durch Trogsonden feststellen läßt. In der Praxis bedeutet dies eine 10 bis 15malige Futtervorlage pro Tag, bei der je nach der Anzeige der Trogsonden auch für gleiche Futterverteilerstränge verschiedene Futtermengen vorbereitet und ausgegeben werden müssen, wobei eine weitere Komplizierung dadurch auftritt, daß einzelne Tiergruppen oder Tiere in benachbarten Ställen je nach Entwicklungs- und Alterungszustand Futter verschiedener Zusammensetzung erhalten sollen.

Aufgabe der Erfindung ist demnach die Schaffung eines Verfahrens der eingangs genannten Art, bei dem mit relativ einfachem Anlagenaufwand eine dosierte Restlosverteilung der Futtermischung bzw. der verschiedenen Futtermischungen auch bei veschiedenen Futtermengen in aufeinanderfolgenden Fütterungsvorgängen für die gleiche Tiergruppe ermöglicht, dabei der Anfall oder die Akkumulierung von mit alten Rückständen kontaminiertem Wasser vermieden und eine ständige Reinhaltung der Leitungssysteme gewährleistet wird.

Die gestellte Aufgabe wird prinzipiell durch die Verfahrensmerkmale des Patentanspruches 1 gelöst.

Beim erfindungsgemäßen Verfahren wird für die Ausgabe des Futterrestes nur eine den bis dahin vom Futterrest gefüllten Leitungszweig ausfüllende, relativ geringe Wassermenge benötigt, wobei zwangsweise bei Fütterungsbeginn in den Auffangbehälter nur das bis dahin die Leitung ausfüllende reine Wasser verdrängt wird, das überdies bereits bei der nächsten Fütterung wieder zum Einsatz kommt. Zwischen der letzten Abgabestelle in der Leitung und dem Auffangbehälter befindet sich selbstverständlich noch ein Leitungszweig, der stets mit reinem Wasser gefüllt bleibt. Es wird also grundsätzlich eine Ansammlung von durch verschieden alte Rückstände kontaminiertem Wasser, das entsorgt werden müßte, vermieden. Überdies ist, wie angeführt, bei vernünftiger Gesamtaufteilung der Futterwege das Füllvolumen des jeweils in Betrieb stehenden Leitungszweiges wesentlich kleiner als die für die Aufbereitung der nächsten Futtermischung für diesen Leitungszweig benötigte Gesamtwassermenge, so daß dem in den Auffangbehälter aus der Leitung entleerten, bei der beschriebenen Vorgangsweise ohnehin praktisch reinem oder kaum kontaminiertem Wasser ganz reines Frischwasser nachfolgt und die Leitung nachspült.

Ein relativ geringes Füllvolumen der Förderleitung bzw. von mehreren zu verschiedenen Auslaßgruppen führenden Förderleitungen wird durch einen möglichst kleinen Leitungsquerschnitt und nach einer Weiterbildung der Erfindung durch die Einhaltung der Verfahrensbedingungen nach Anspruch 2 erhalten. Es werden bei dieser bevorzugten Ausgestaltung also ohnehin vorhandene, aber momentan für die Fütterung selbst nicht in Betrieb stehende Leitungen und Leitungsteile als Speicher für den beim Futterausteilvorgang benötigten Wasservorrat bzw. für einen Teil dieses Vorrates verwendet, wobei sich durch Verwendung von Stichleitungen kurze zusätzliche, also nicht mit Auslässen bestückte Leitungsabschnitte ergeben und damit insgesamt ein geringes Füllvolumen der Förderleitung erzielt wird. Wenn nur eine Förderleitung, die auch eine Stichleitung sein kann, im Einsatz steht, wird der Wasservorrat für das Austreiben des Restfutters in einem eigenen Behälter untergebracht.

Eine weitere Vereinfachung des Anlagenaufwandes bei dem erfindungsgemäßen Verfahren ergibt sich durch Einhaltung der Bedingungen nach Anspruch 3.

Weitere Einzelheiten und Vorteile des erfindungsgemäßen Verfahrens werden im Zusammenhang mit der nachfolgenden Zeichnungsbeschreibung erläutert.

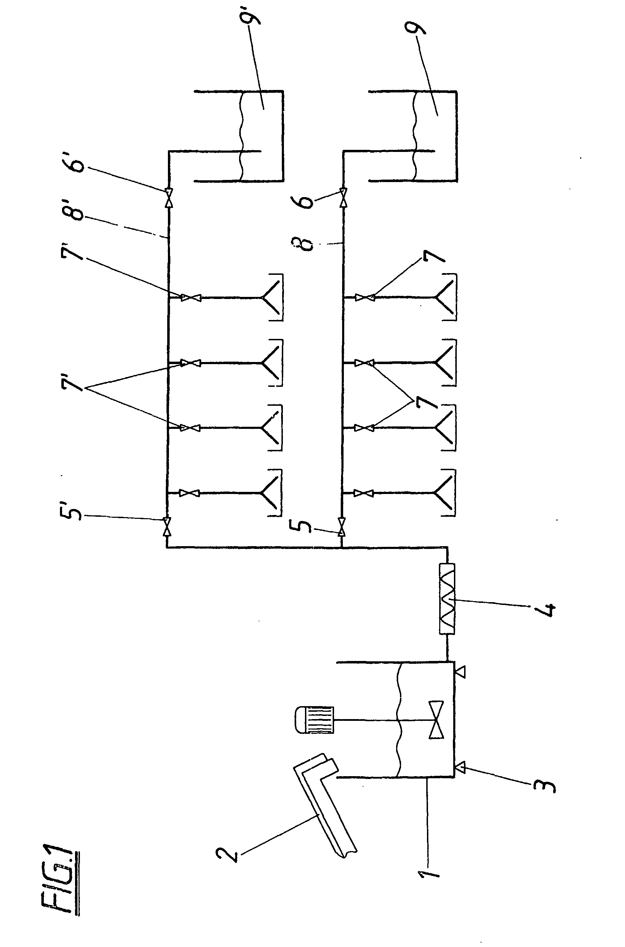

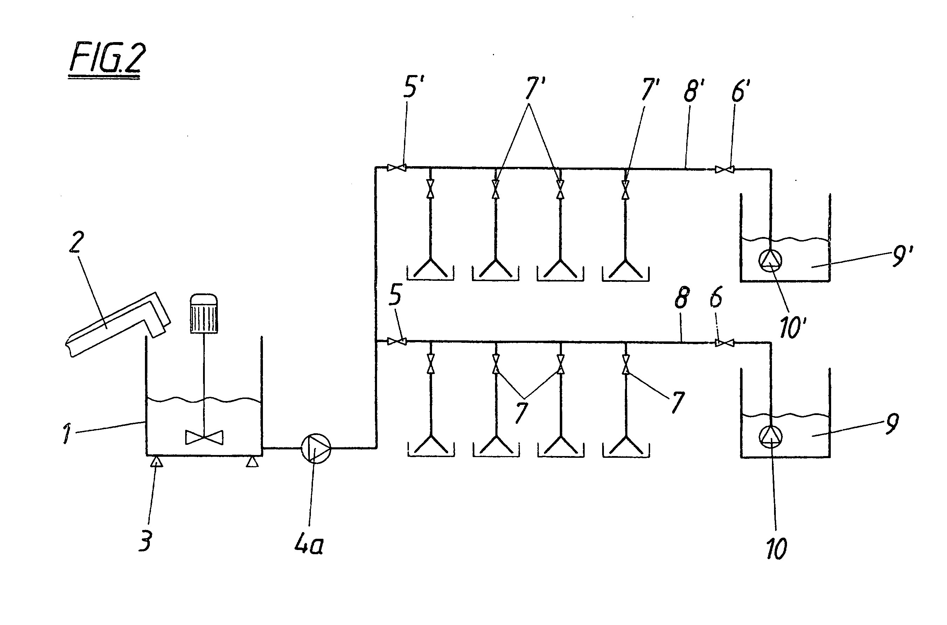

In den Fig. 1 und 2 der Zeichnung sind rein schematisch zwei Anlagen zur Durchführung des erfindungsgemäßen Verfahrens veranschaulicht, wobei nur die wesentlichen Teile dieser Anlagen angedeutet wurden, da die zusätzlich benötigten Steuer- und Schalteinrichtungen allgemeiner Stand der Technik sind.

Bei beiden Ausführungsformen besitzt die Anlage einen Mischbehälter 1 für die Zubereitung verschiedener Futtermischungen, dem über Zubringer 2 die benötigten Futterkomponenten zugeführt werden können und der auf einer Wiegeeinrichtung 3 abgestützt ist, mit deren Hilfe sowohl die jeweilige Menge der Futterzutaten bestimmt als auch die Futterabgabe gesteuert wird. Eine zentrale Steuereinheit ist vorgesehen, die nach Signalen der Wiegeeinrichtung 3 und nach einer Zeitsteuereinrichtung sowie nach weiteren Signalen von Trogsonden an den einzelnen Abgabestellen Aufbereitung und Austeilung des Futters und auch die weiteren Vorgänge bei der Futterausteilung steuert. Eine dem Mischbehälter 1 nachgeordnete Pumpe 4, 4a, die nach Fig. 1 eine je nach Antriebsrichtung in beiden Richtungen fördernde Pumpe, nach Fig. 2 (4a) aber eine nur im Sinne des Wegförderns vom Mischbehälter 1 fördernde Kreiselpumpe ist, fördert das flüssige Futter in zwei Leitungszweige 8, 8', die über Absperrorgane 5, 5' am mischerseitigen und Absperrorgane 6, 6' am auslaßseitigen Ende verschließbar sind. Der Leitungsabschnitt zwischen den Absperrorganen 5, 6 bzw. 5', 6' dient der Beschickung von Auslässen über Absperrorgane 7, 7', wobei diese Auslässe in mit den erwähnten Trogsonden ausgestattete Tröge führen. Das dem Absperrorgan 6, 6' nachgeordnete Ende der Leitung mündet mit Abstand vom letzten Absperrorgan 7, 7' bzw. 6, 6' in einen Auffangbehälter 9, 9', wobei nach Fig. 1 nur ein Sauganschluß vorgesehen, nach Fig. 2 aber von der Steuereinheit steuerbare Förderpumpen 10 ,10 zur Beschickung der Leitungen 8, 8' vorgesehen sind. Über eine Schwimmersteuerung kann der Flüssigkeitsspiegel in den Behältern 9, 9' von einer Wasserleitung her auf ein einheitliches Niveau eingestellt werden. Auch die Ventile 5, 5', 6, 6', 7, 7' und auch nach Fig. 2 die Pumpen 10, 10' werden von der zentralen Steuereinheit entsprechend dem Ablauf des Verfahrens gesteuert.

Bei der Durchführung des erfindungsgemäßen Verfahrens ergeben sich folgende Verfahrensschritte: Vor Beginn eines Fütterungsvorganges sind alle Leitungen 8, 8' mit reinem Wasser gefüllt. Unter der Annahme, daß zunächst die an der Leitung 8 liegenden Abgabestellen mit Futter bedient werden sollen, bleiben zunächst die Absperrorgane 5', 6' geschlossen und die Absperrorgane 5, 6 öffnen bei geschlossen bleibenden Absperrorganen 7. Durch Einschaltung der Pumpe 4 im Rückfördersinn nach Fig. 1 bzw. durch Einschaltung der Pumpe 10 wird aus dem Auffangbehälter 9 reines Wasser angesaugt und in der für die Aufbereitung der Futtermischung benötigten Menge in den Behälter 1 geleitet, wodurch die Leitung 8 noch einmal gereinigt wird. Dann werden die Pumpen 4 bzw. 10 abgeschaltet, die Futterzutaten über die Zubringer 2 zugeführt und mit dem Wasser vermischt. Nun wird die Pumpe 4, 4a im Futterförderungssinn eingeschaltet und drückt das Flüssigfutter in die Leitung 8, wobei zunächst das hier vorhandene reine Wasser über das Ventil 6 in den Auffangbehälter 9 ablaufen kann. Wenn die Futtersäule das in Förderrichtung letzte Abgabeventil 7 bzw. höchstens in Ausnahmefällen das Ventil 6 erreicht hat, wird das Ventil 6 geschlossen und es wird gleichzeitig durch Abfrage der Waage 3 durch die zentrale Steuereinheit die Futtermenge registriert, die zur Ausfüllung der Leitung benötigt wird. Beginnend mit der Öffnung des der Pumpe 4 bzw. 4a nächstliegenden Abgabeventils 7 werden nun nacheinander entsprechend der Vorermittlung durch die Trogsonden an die Abgabestellen entsprechende Futtermengen abgegeben. Sobald der Mischbehälter 1 und die Leitung bis zur Pumpe 4, 4a leer ist, wird zunächst das Ventil 5 geschlossen und die Ventile 5', 6' im Leitungsteil 8' werden geöffnet. Bei der Ausführung nach Fig. 1 wird nun die Pumpe 4 im Saugsinn angetrieben, wogegen bei der Ausführung nach Fig. 2 die Pumpe 10' eingeschaltet wird, so daß in beiden Fällen eine dem vorher ermittelten Füllvolumen der Leitung 8 entsprechenden Wassermenge unter Steuerung der erwähnten Pumpen in den Mischbehälter 1 gefördert wird. Dann werden die Absperrorgane 5' 6' wieder geschlossen und die Leitung 8' ist daher wieder mit Wasser gefüllt. Das Ventil 5 wird geöffnet und die Pumpe 4, 4a im Fördersinn eingeschaltet, so daß sie das Wasser aus dem Mischbehälter 1 in die Leitung 8 drückt und dadurch bei Öffnung der entsprechenden Ventile 7 den erwähnten Futterrest genau dosiert an die Abgabestellen abgibt. Nach dieser Futterausgabe ist die Leitung 8 wieder mit dem vorher über 8' in den Mischbehälter 1 und nun zurückgeförderten Wasser gefüllt. Wird nun eine andere Futtermischung für den Leitungszweig 8' vorbereitet, dann wird zunächst die benötigte Wassermenge durch Ansaugen über die Pumpe 4 bzw. Einschalten der Pumpe 10' in den Mischbehälter 1 gefördert und zum Futter aufbereitet sowie schließlich wie vorher im Zusammenhang mit dem Leitungszweig 8 beschrieben, über die Auslaßventile 7' dosiert abgegeben, wobei vorher wieder das Füllvolumen des Leitungsteiles 8' ermittelt wurde. Nach Entleerung des Mischbehälters 1 wird die dem Füllvolumen der Leitung 8' entsprechende Wassermenge aus der Leitung 8 und dem Behälter 9 mittels der Pumpe 4 bzw. 10 entnommen, im Behälter gespeichert und dann unter Entleerung des Leitungszweiges 8' vom noch vorhandenen Futter mittels des Wassers und der Ausgabeventile 7' an die einzelnen Abgabestellen bzw. nur an für die Restfutterverteilung bestimmte Abgabestellen verteilt. Nach dieser Verteilung ist auch die Leitung 8' wieder mit Wasser gefüllt, das bei der nächsten Restfutterverteilung in der Leitung 8 wieder Verwendung findet.

Falls nur eine Leitung 8 vorhanden ist, kann man statt der Leitung 8' einen zusätzlichen Vorratsbehälter verwenden.

Bei Verwendung von Molke oder anderen flüssigen Futtermitteln für die Flüssigfutteraufbereitung darf kein zusätzliches Wasser verwendet werden. Das beschriebene Verfahren ist aber trotzdem einsetzbar, doch muß auf die zusätzliche Reinigung durch Durchspülen der Leitungen mit Wasser verzichtet werden.

## Patentansprüche

1. Verfahren zum Aufbereiten und dosierten Zuführen von Flüssigfutter zu mehreren, entlang wenigstens einer Förderleitung (8, 8') angeordneten Abgabestellen, wobei das Futter in einer für den jeweiligen Fütterungsvorgang benötigten Menge in einem Mischbehälter (1) vorbereitet, mittels einer Förderpumpe (4, 4a) unter Verdrängung einer Wasserfüllung der Förderleitung (8, 8') in einen Auffangbehälter (9, 9') zumindest bis zur Entleerung des Mischbehälters (1) über den Abgabestellen zugeordnete Ausgabeventile (7, 7') ausgeteilt und dann die im Leitungssystem (8, 8') enthaltene Restfuttermenge durch Nachförderung von Wasser mittels der Förderpumpe (4, 4a) vollständig an wenigstens einen Teil der Abgabestellen ausgegeben wird, **dadurch gekennzeichnet, daß** eine Förderleitung (8, 8') gewählt wird, deren Füllvolumen nur einen Bruchteil der für die Futteraufbereitung bei einem Fütterungsvorgang benötigten Wassermenge beträgt, und daß vor Fütterungsbeginn das für die Vorbereitung des Futters für einen Fütterungsvorgang benötigte Wasser in gegenüber dem Fütterungsvorgang entgegengesetzter Förderrichtung aus der Förderleitung (8, 8') und dann über diese aus dem Auffangbehälter (9, 9') entnommen wird, dem zusätzlich zu dem bei einem vorherigen Fütterungsvorgang in ihn verdrängten Wasser Frischwasser zugeführt wird, das die Förderleitung (8, 8') spült und bis zur Fütterung auch die Förderleitung (8, 8') ausfüllt und daß nach Anmischung des Futters und Förderbeginn bei geschlossen bleibenden Ausgabeventilen (7, 7') das Füllvolumen der Förderleitung (8, 8') nach der für die Verdrängung des Wasser zugeführten Futtermenge bestimmt und nach der Entleerung des Mischbehälters (1) vom Futter diesem Mischbehälter (1) für die Ausgabe des Futterrestes eine nur dem Füllvolumen der Förderleitung (8, 8') entsprechende Wassermenge von einem Vorrat her zugeführt wird.

2. Verfahren nach Anspruch 1, **dadurch gekennzeichnet, daß** zur Abgabe des Futters bzw. veschiedener Futtermischungen zwei oder mehrere über Absperrorgane (5, 5') von einer Futterhauptleitung abzweigende, zu je einer Gruppe von Ausgabestellen führende Stichleitungen (8, 8') mit am Ende angeordneten Auffangbehältern (9, 9') für das beim Fütterungsvorgang aus diesen Leitungen verdrängte Wasser verwendet werden, diese Auffangbehälter (9, 9') mit der Frischwasserleitung verbunden werden und beim Futterausteilvorgang in einer Stichleitung (8 bzw. 8') die dem Füllvolumen dieser Leitung (8 bzw. 8') bei der Futterrestverteilung entsprechende Wassermenge in entgegengesetzter Strömungsrichtung aus der bzw. einer der weiteren Stichleitungen (8 bzw. 8') und deren Auffangbehälter (9' bzw. 9) entnommen wird.

3. Verfahren nach einem der Anspruch 1 oder 2, **dadurch gekennzeichnet, daß** für die Futterförderung vom Mischbehälter (1) eine nur in Abgaberichtung fördernde Pumpe (4a), insbesondere eine Kreiselpumpe, und für die Wasserrückführung aus dem bzw. den Auffangbehältern (9, 9') dort angeordnete steuerbare Förderpumpen (10, 10') verwendet werden.

## Claims

1. Method for the preparation and the dosed delivery of liquid feed to a plurality of output points arranged along at least one pipeline (8, 8') wherein the feed is prepared in the required amount for the respective feeding process in a mixing container (1), dispensed by means of a feed pump (4, 4a) with the displacement of a water filing of the pipeline (8, 8') into a collecting container (9, 9') at least until the mixing container (1) is emptied by means of output valves (7, 7') assigned to the output points and then the remaining amount of feed contained in the line system (8, 8') is output through the subsequent supply of water by means of the feed pump (4, 4a) completely to at least some of the output points, **characterised in that** a pipeline (8, 8') is selected whose fill volume is only a fraction of the amount of water required for the feed preparation during a feeding process, and **in that** before the start of feeding the water required for the preparation of the feed for a feeding process is removed in a direction of conveyance contrary to the feeding process out of the pipeline (8, 8') and then via this out of the collecting container (9, 9'), to which in addition to the water displaced into it during a previous feeding process fresh water is supplied which rinses the pipeline (8, 8') and also fills the pipeline (8, 8') until the feeding and **in that** after the mixing of the feed and start of conveyance when the output valves (7, 7') remain closed the fill volume of the pipeline (8, 8') is determined according to the amount of feed supplied for the displacement of the water and after the emptying of the mixing container (1) of feed an amount of water corresponding only to the fill volume of the pipeline (8, 8') is supplied from a supply to this mixing container (1) for the output of the remaining feed.

2. Method according to claim 1, **characterised in that** for the output of the feed or different feed mixtures two or more branch lines (8, 8') are used branching off from a main feed line via valves (5, 5'), each leading to a group of output points, with collecting containers (9, 9') disposed at the end for the water displaced out of these lines during the feeding process, these collecting containers (9, 9') are connected to the fresh water line and during the feed dispensing process in a branch line (8 or 8') the amount of water corresponding to the fill volume of this line (8 or 8') during the remaining feed distribution is removed in the opposite flow direction from the, or one of the, branch line(s) (8 or 8') and its / their collecting tank(s) (9' or 9).

3. Method according to one of the claims 1 or 2, **characterised in that** for the conveyance of feed from the mixing container (1) a pump (4a) conveying only in the output direction, particularly a centrifugal pump, is used and for the water re-circulation from the collecting container(s) (9, 9') controllable feed pumps (10, 10') arranged there are used.

## Revendications

1. Procédé de préparation et d'alimentation dosée d'aliments liquides pour animaux, vers une pluralité de poste de distribution, disposés le long d'au moins une conduite de transport (8,8'), l'alimentation pour animal étant préparée en une quantité suffisante pour le processus de nourrissement animal respectif dans un récipient de mélange (1), distribuée au moyen d'une pompe de transfert (4,4a) avec refoulement d'un remplissage d'eau de la conduite de transport (8,8'), dans un récipient de captage (9,9'), au moins jusqu'au vidage du récipient de mélange (1), par l'intermédiaire de soupapes de distribution (7,7') associées aux postes de distribution, et, ensuite, la quantité de nourrissement animal résiduelle, contenue dans le système de tuyauterie (8,8'), est complètement distribuée en au moins une partie des postes de distribution, par un post-transfert d'eau, effectué au moyen de la pompe de transfert (4,4a), **caractérisé en ce qu'**est choisie une conduite de transport (8,8') dont le volume de remplissage ne fait qu'une fraction de la quantité d'eau nécessaire pour la préparation de nourrissement animal lors d'un processus de nourrissement animal, et **en ce qu'**avant le début de nourrissement animal, l'eau nécessaire pour la préparation de l'aliment animal, pour effectuer un processus de nourrissement animal, est prélevée de la conduite de transport (8,8'), dans un sens de transport opposé à celui du processus de nourrissement animal et, ensuite, par celle-ci est prélevée du récipient de captage (9,9') auquel, en plus de l'eau refoulée lors d'un processus de nourrissement animal précédent est amenée de l'eau neuve, qui rince la conduite de transport (8,8') et, jusqu'au nourrissement animal, remplit également cette conduite de transport (8,8'), et **en ce que**, après adjonction et mélange de l'aliment animal et début du transport, alors que les soupapes de distribution (7,7') restent fermées, le volume de remplissage de la conduite de transport (8,8') est déterminé, selon la quantité d'aliment animal amenée pour procéder au refoulement de l'eau et, après vidage du récipient (1) de l'aliment animal s'y trouvant, à ce récipient de mélange (1), pour distribution du reste d'aliment animal depuis une réserve, est amenée une quantité d'eau, correspondant uniquement au volume de remplissage de la conduite de transport (8,8').

2. Procédé selon la revendication 1, **caractérisé en ce que**, pour la distribution d'aliment animal ou de différents mélanges d'aliments animaux, sont utilisés deux piquages (8,8') ou plus, menant, par des organes d'isolement (5,5'), en se ramifiant d'une conduite principale de nourrissement animal, chacune à un groupe de postes de distribution, avec des récipients de captage (9,9'), disposés en bout de conduite, pour l'eau refoulée de ces conduites lors du processus de nourrissement animal, ces récipients de captage (9,9') étant reliés à la conduite d'eau neuve et, lors d'un processus de distribution de nourrissement animal, dans une conduite de piquage (8 ou 8'), la quantité d'eau, correspondant au volume de remplissage de cette conduite (8 ou 8') lors de la distribution de restes d'aliment animal, est prélevée dans un sens d'écoulement opposé, depuis la ou l'une des autres conduites de piquage (8 ou 8') et leurs récipients de captage (9' ou 9).

3. Procédé selon l'une des revendications 1 ou 2, **caractérisé en ce que**, pour le transfert d'aliments pour animaux depuis le récipient de mélange (1), est utilisée une pompe (4a) pompant en direction de distribution, en particulier une pompe centrifuge et, pour le recyclage de l'eau depuis le ou les récipients de captage (9,9'), disposés à cet endroit, sont utilisées des pompes de transfert (10,10') pouvant être commandées.
